# EUROPÄISCHE PATENTSCHRIFT

(11) **EP 2 297 752 B1**
(45) Veröffentlichungstag und Bekanntmachung des Hinweises auf die Patenterteilung: **20.09.2017**
(21) Anmeldenummer: 09779942.3
(22) Anmeldetag: 25.06.2009
(51) Int. Cl.: H01F 38/12, H01F 5/04, F21V 19/00, F21V 23/02

(54) **TRANSFORMATOR SOWIE LAMPENSOCKELELEMENT, LAMPENSOCKEL UND ENTLADUNGSLAMPE MIT EINEM DERARTIGEN LAMPENSOCKEL**
TRANSFORMER AND LAMP BASE ELEMENT, LAMP BASE AND DISCHARGE LAMP HAVING SUCH A LAMP BASE
TRANSFORMATEUR AINSI QUE ÉLÉMENT DE CULOT DE LAMPE, CULOT DE LAMPE ET LAMPE À DÉCHARGE AVEC UN CULOT DE LAMPE DE CE TYPE

(30) Priorität: 15.07.2008 DE 102008033192
(43) Veröffentlichungstag der Anmeldung: 23.03.2011
(73) Patentinhaber: OSRAM GmbH, 80807 München (DE)
(72) Erfinder: SROKA, Frank, 10439 Berlin (DE)
(86) Internationale Anmeldenummer: PCT/EP2009/057952
(87) Internationale Veröffentlichungsnummer: WO 2010/006911

(56) Entgegenhaltungen:
- EP-A- 1 511 130
- EP-A- 1 511 131
- DE-A1- 19 521 070
- DE-A1-102006 014 695
- DE-U1- 20 312 503
- JP-A- 2005 285 368

## Beschreibung

### Technisches Gebiet

Die Erfindung betrifft ein Lampensockelelement mit einem Transformator gemäß dem Oberbegriff des Patentanspruchs 1, einen Lampensockel mit einem derartigen Lampensockelelement und eine Entladungslampe mit einem derartigen Lampensockel.

### Stand der Technik

In der EP 1 511 131 A1 ist ein Transformator offenbart, der in einem Lampensockel für eine Hochdruckentladungslampe aufgenommen ist. Der Transformator hat eine Primärwicklung, die um ein Transformatorgehäuse gewickelt ist, wobei die Wicklungsabgänge weg von dem Transformatorgehäuse weisen. Eine Sekundärwicklung des Transformators ist innerhalb des Transformatorgehäuses angeordnet, wobei die Wicklungsabgänge durch das Transformatorgehäuse nach außen geführt sind. Nachteilig hierbei ist, dass die Wicklungsabgänge der Primär- und Sekundärwicklung des Transformators eine geringe mechanische Steifigkeit aufweisen und deswegen zum Schutz gegen äußere mechanische Einflüsse, vor der Montage in den Lampensockel, beispielsweise in sogenannten Transformatorentrays kostenaufwendig gelagert sind. Ein weiterer Nachteil sind die hohen Materialkosten, da der gesamte Lampensockel und der Transformator, wegen der hohen im Betrieb der Hochdruckentladungslampe auftretenden Temperaturen, aus einem hochtemperaturbeständigen und kostenintensiven Kunststoff bestehen.

Die DE 195 21 070 A1 offenbart einen Hochspannungstransformator und eine Entladungslampenschaltung. Der Hochspannungstransformator weist einen Kern, eine Primärwicklung, eine Sekundärwicklung, eine Grundplatte und Isolationsmaterial, das den Kern und die Sekundärwicklung bedeckt, sowie einen leitenden Halter auf, der als Primärwicklung dient. Die DE 10 2006 014 695 A1 beschreibt ein Verfahren zur Herstellung eines elektrisch isolierenden Vergusskörpers und einen Sockel für eine Lampe.

### Darstellung der Erfindung

Die Aufgabe der vorliegenden Erfindung ist es, ein Lampensockelelement, einen Lampensockel und eine Entladungslampe zu schaffen, die kostengünstig herstellbar und robust gegen äußere Einflüsse sind.

Diese Aufgabe wird durch ein Lampensockelelement mit den Merkmalen des Patentanspruchs 1, einen Lampensockel mit den Merkmalen des Patentanspruchs 9 und eine Entladungslampe mit den Merkmalen des Patentanspruchs 16 gelöst.

Besonders vorteilhafte Ausgestaltungen finden sich in den abhängigen Ansprüchen.

Der Transformator des erfindungsgemäßen Lampensockelelements zur Montage in einem Lampensockel weist ein Transformatorgehäuse auf, das einen mit einer ersten Wicklung versehenen Transformatorkern umschließt. Um das Transformatorgehäuse herum ist eine zweite Wicklung angeordnet, die vorteilhafter Weise mit zumindest einem Kontaktelement an dem Transformatorgehäuse festgelegt ist.

Diese Lösung hat den Vorteil, dass der Transformator eine hohe mechanische Festigkeit aufweist, insbesondere im Bezug auf die zweite Wicklung, wodurch der Transformator schüttgutfähig sein kann.

Das Kontaktelement ist als in eine Aufnehmung des Transformatorgehäuses vorzugsweise selbsthemmend aufgenommener Kontaktpin ausgebildet. Die zweite Wicklung des Transformators kann dabei beispielsweise von zwei Kontaktpins mechanisch fixiert und elektrisch kontaktiert sein. Hierdurch ist die zweite Wicklung des Transformators einfach fixierbar und sehr robust.

Die zweite Wicklung kann als Flachbandwicklung ausgeführt sein und an jeweiligen Wicklungsenden Fixierausnehmungen aufweisen, durch welche die Kontaktpins hindurch geführt sind. Eine derartige Flachbandwicklung ist einfach herstell- und an den Transformator montierbar.

Zweckmäßig ist, wenn die Kontaktpins jeweils in etwa mittig einen Klemmkragen aufweisen und die Flachbandwicklung zwischen den Klemmkragen und dem Transformatorgehäuse angeordnet ist, wodurch die Flachbandwicklung mechanisch äußerst robust festgelegt ist.

Vorteilhaft weist das Transformatorgehäuse einen etwa ellipsenförmigen Querschnitt auf, wobei die Länge des Transformatorgehäuses größer als die maximale Höhe ist.

Zur einfachen Montage des Transformators mit einem Lampensockel können die Kontaktpins vom Hauptscheitel des Transformatorgehäuses radial nach außen in die gleiche Richtung weisen.

Erfindungsgemäß ist ein Lampensockelelement zur Aufnahme eines Transformators vorgesehen. Diese Lösung hat den Vorteil, dass das Lampensockelelement und der Transformator als separates Bauteil von einem Lampensockel im Wesentlichen mechanisch entkoppelt sind, und beispielsweise aus einem kostengünstigeren Kunststoff mit einem höheren Wärmeausdehnungskoeffizienten herstellbar sind. Weiterhin hat das Lampensockelelement zum Schutz des Transformators eine den Transformator vollständig aufnehmende Transformatorkammer.

Die Kontaktpins des Transformators sind dabei durch eine einer Öffnungsseite gegenüberliegenden Kontaktierungsseite der Transformatorkammer hindurch geführt, um ein einfaches Kontaktieren beispielsweise mit einer Platine zu ermöglichen.

In einer vorteilhaften Ausgestaltung der Erfindung wird ein Mittenkontaktelement in der Transformatorkammer derart eingebracht, so dass ein Transformatorkontaktbereich des Mittenkontaktelements zur Kontaktierung der aus dem Transformatorgehäuse geführten ersten Wicklung des Transformators innerhalb und ein Lampenkontaktbereich des Mittenkontaktelements, insbesondere zur Kontaktierung einer Hochdruckentladungslampe, außerhalb der Transformatorkammer angeordnet wird.

Zur elektrischen Isolierung kann vorteilhafterweise ein Kammerinnenraum der Transformatorkammer des Lampensockelelements nach der Aufnahme des Transformators mit einem Vergusswerkstoff ausgegossen sein.

Der Vergusswerkstoff ist beispielsweise ein kostengünstiger Silikonkautschuk.

Die Transformatorkammer hat vorteilhafter Weise eine die Öffnungsseite begrenzende Mantelfläche, die zwei Längsseiten und zwei Querseiten aufweist, wobei die Seiten im Wesentlichen rechteckig zueinander angeordnet sind.

Bei einer vorteilhaften Ausgestaltung ist der Lampenkontaktbereich des Mittenkontaktelements in einem Mittenkontaktring aufgenommen, der mittig in Längsrichtung der Längsseite der Transformatorkammer derart an die Längsseite angeformt ist, dass eine Ringachse des Mittenkontaktrings sich in etwa parallel zu den Kontaktpins des Transformators erstreckt und eine Ringoberseite des Mittenkontaktrings in etwa bündig mit der Öffnungsseite der Transformatorkammer abschließt. Hierdurch ist der Transformator beim Einbau des Lampensockelelements in den Lampensockel einfach mit beispielsweise einer Hochdruckentladungslampe kontaktierbar.

In etwa mittig von dem Mittenkontaktring kann ein Trichter ausgebildet sein, der sich entlang der Ringachse in Richtung der von der Transformatorkammer weg weisenden Flächennormalen der Öffnungsseite bis zum Lampenkontaktbereich des Mittenkontaktelements hin verjüngt. Durch den Trichter ist eine einfache Aufnahme beispielsweise einer Stromzuführung bei der Montage einer Hochdruckentladungslampe ermöglicht.

Vorteilhafterweise bildet der Mittenkontaktring an einer Ringunterseite eine Ringfeder und einen einen größeren Radius als die Ringfeder aufweisenden ringförmigen Energierichtungsgeber jeweils zur Verbindung mit einem Lampensockel aus. Der Energierichtungsgeber kann zum einfachen Ultraschallverschweißen des Lampensockelelements mit dem Lampensockel dienen.

An der Kontaktierungsseite der Transformatorkammer können die Kontaktpins von außen mit Kontaktplatten verbunden sein, die eine flächige Kontaktierungsmöglichkeiten mit beispielsweise einer Platine zur Verfügung stellen.

Die Kontaktplatten ragen in Längsrichtung der Transformatorkammer jeweils abschnittsweise nach außen und können hierdurch einfach beispielsweise mit anderen Elementen in diesem Bereich verschweißt werden.

Vorzugsweise können die Kontaktplatten jeweils abschnittsweise von der Querseite der Mantelfläche aus vorspringenden Fixierungselementen berandet sein, die als Schutz beispielsweise bei der Montage des Lampensockelelements mit dem Lampensockel dienen können.

Zu einer einfachen Montage des Lampensockelelements mit dem Lampensockel kann an der Kontaktierungsseite des Lampensockelelements zumindest ein Passstift ausgebildet sein.

Erfindungsgemäß hat ein Lampensockel, insbesondere zur Aufnahme einer Hochdruckentladungslampe, eine Trägerplatte. Hierbei kann an einer der Hochdruckentladungslampe abgewandte Trägerseite der Trägerplatte ein zylindrischer Mitteldom angeformt sein. An dem Mitteldom liegt dabei das Lampensockelelement mit der Ringunterseite an einer Mitteldomkopfseite in etwa an und ist an dem Mitteldom festgelegt. Durch diese Lösung ist ein mehrteiliger Lampensockel realisiert, der einfach montierbar und beispielsweise aus unterschiedlichen Werkstoffen bestehen kann.

Eine Steckerbuchse kann kostengünstig seitlich an einem die Trägerplatte abschnittsweise umgebenden Mantelflächenabschnitt einstückig ausgebildet sein.

In weiterer Ausgestaltung des Lampensockels können in dem Lampensockel eingebettete Kontaktpins einer Steckerbuchse aus der Trägerseite auskragen und in Ausnehmungen einer im Bereich der Trägerplatte angeordneten Platine einfach eingreifen, wodurch eine elektrische und mechanische Verbindung der Kontaktpins mit der Platine ermöglicht ist.

Der zylindrische Mitteldom erstreckt sich vorzugsweise durch eine Platinenausnehmung der Platine hindurch.

Zur einfachen elektrischen Kontaktierung des Transformators und zur Fixierung des Lampensockelelements mit dem Lampensockel können einfach die Kontaktplatten des Lampensockelelements mit der Platine elektrisch und mechanisch verbunden sein.

Vorteilhafter Weise taucht die Ringfeder und der Energierichtungsgeber des Lampensockelelements in jeweils eine Ringnut des Mitteldoms ein, wodurch das Lampensockelelement mit dem Lampensockel durch ein Ultraschallschweißverfahren äußerst fest verbunden werden kann.

Der Mitteldom kann beispielsweise einen Stromzuführungskanal aufweisen, der in den Trichter des Lampensockelelements mündet, um beispielsweise eine in den Stromzuführungskanal eingebrachten Stromzuführung der Hochdruckentladungslampe mit dem Mittenkontaktelement des Lampensockelelements zu verbinden.

Der Lampensockel kann mit einem Sockeldeckel umschlossen sein, wobei der Sockeldeckel eine Ringfeder und einen ringförmigen Energierichtungsgeber ausbildet, die jeweils in eine Ringnut des Lampensockelelements eingetaucht sind. Durch die Ringfeder und den Energierichtungsgeber kann der Sockeldeckel einfach mit dem Lampensockel verbunden werden.

Zweckmäßig ist es, wenn die Platine im Bereich der Kontaktpins des Lampensockelelements Dehnungsfugen aufweist, wodurch Volumenänderungen der Platine und oder des Lampensockelelements aufgrund von Temperaturschwankungen einfach ausgeglichen werden können.

Zur Lagefixierung taucht zumindest ein Passstift des Lampensockelelements in zumindest eine Stiftaufnahme der Platine.

Eine einfach herstellbare erfindungsgemäße Entladungslampe weist den oben beschriebenen Lampensockel auf.

### Kurze Beschreibung der Zeichnungen

Im Folgenden soll die Erfindung anhand eines Ausführungsbeispiels näher erläutert werden. Die Figuren zeigen:
- Fig. 1: Eine Seitenansicht einer Hochdruckentladungslampe gemäß einem Ausführungsbeispiel der Erfindung.
- Fig. 2: Eine Seitenansicht eines Lampensockels gemäß dem Ausführungsbeispiel.
- Fig. 3: Eine Seitenansicht eines Lampensockelelements gemäß dem Ausführungsbeispiel.
- Fig. 4a: Eine perspektivische Ansicht eines Transformators gemäß dem Ausführungsbeispiel.
- Fig. 4b: Einen Ausschnitt des Transformators aus Fig. 4a in einer Schnittansicht.
- Fig. 5: Eine Draufsicht auf das Lampensockelelement gemäß dem Ausführungsbeispiel.
- Fig. 6: Eine Untersicht auf das Lampensockelelement gemäß dem Ausführungsbeispiel.
- Fig. 7: Eine Draufsicht auf den Lampensockel gemäß dem Ausführungsbeispiel.
- Fig. 8: Eine Seitenansicht des Lampensockels gemäß dem Ausführungsbeispiel.

### Bevorzugte Ausführung der Erfindung

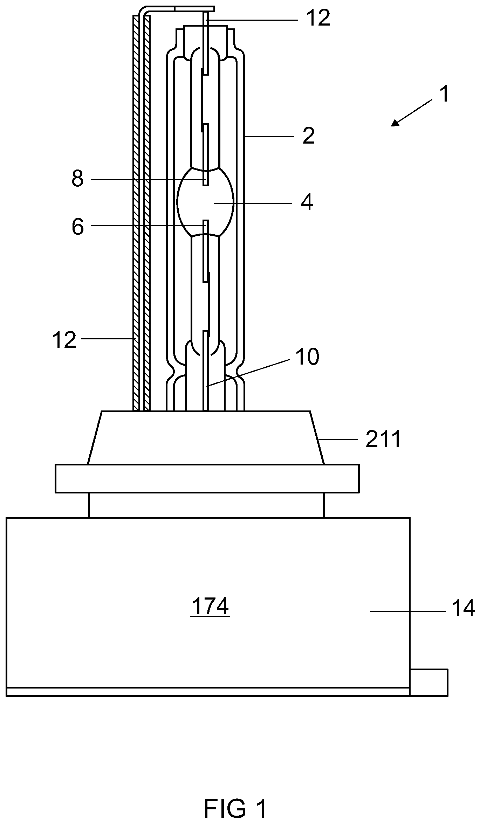

Figur 1 zeigt eine Seitenansicht auf eine Hochdruckentladungslampe 1 gemäß einem bevorzugten Ausführungsbeispiel, welche vorzugsweise für einen Kraftfahrzeugscheinwerfer verwendet wird. Diese weist ein von einem gläsernen Außenkolben 2 umschlossenes Entladungsgefäß 4 aus Quarzglas mit darin angeordneten Elektroden 6, 8 zum Erzeugen einer Gasentladung auf. Die Elektroden 6 und 8 sind jeweils mit einer aus dem Entladungsgefäß 4 heraus geführten Stromzuführung 10 bzw. 12 zur Versorgung mit elektrischer Energie verbunden.

Der Außenkolben 2 und das Entladungsgefäß 4 sind an einem Lampensockel 14 angesetzt, der mit einem in der Figur 1 nicht dargestellten Lampensockelelement, in das ein Transformator eingebracht ist, ausgebildet ist.

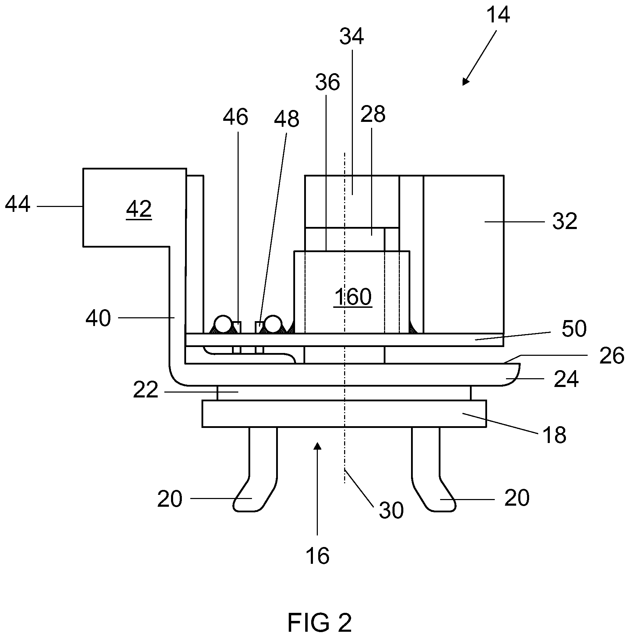

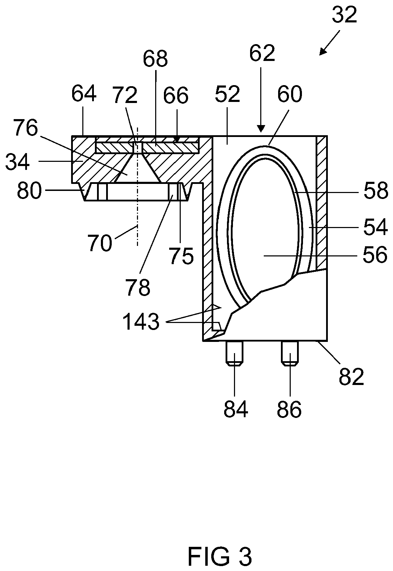

Figur 2 zeigt den Lampensockel 14 aus Figur 1 gemäß dem Ausführungsbeispiel quasi auf den Kopf gestellt, wobei der Lampensockel 14 ohne einen Sockeldeckel dargestellt ist. Der Lampensockel 14 bildet an seiner in Figur 2 unteren Sockelseite 16 einen Referenzring 18 mit nach unten auskragenden Haltefahnen 20 zur Lagefixierung der Hochdruckentladungslampe 1 aus Figur 1 aus. Der Referenzring 18 ist dabei über einen zylindrischen Steg 22 auf der den Haltefahnen 20 gegenüberliegenden Seite mit einer Trägerplatte 24 des Lampensockels 14 verbunden. Die Trägerplatte 24 weist auf ihrer dem Referenzring 18 abgewandten Trägerseite 26 einen in etwa mittig angeordneten zylinderförmigen Mitteldom 28 auf, der sich im Wesentlichen entlang der Sockellängsachse 30 erstreckt. Ein Lampensockelelement bzw. Sockelelement 32, das in der folgenden Figur 3 näher erläutert wird, ist über einen an dem Sockelelement 32 ausgebildeten Mittenkontaktring 34 mit einer Domstirnfläche 36 des Mitteldoms 28 verbunden.

Die Trägerplatte 24 hat einen in etwa rechteckförmigen Umfang, wobei an einem in der Figur 2 linken Mantelflächenabschnitt 40 des Lampensockels 14 eine Steckerbuchse 42 zur elektrischen Kontaktierung der Hochdruckentladungslampe 1 einstückig ausgebildet ist. Die Steckerbuchse 42 kragt dabei in etwa auf der Höhe des Mittenkontaktrings 34 des Sockelelements 32 nach außen. Eine Steckeraufnahme der Steckerbuchse 42 ist von der in Figur 2 linken Stirnseite 44 der Steckerbuchse 42 zugänglich. In den Lampensockel 14 sind Kontaktpins 46, 48 eingebettet, die sich von der Steckerbuchse 42 über den Mantelflächenabschnitt 40 und die Trägerplatte 24 erstrecken und etwa zwischen dem Mantelflächenabschnitt 40 und dem Mitteldom 28 aus der Trägerseite 26 der Trägerplatte 24 im Wesentlichen parallel zur Sockellängsachse 30 auskragen. Die Drahtlängen der Kontaktpins können insgesamt unterschiedlich sein, so dass der in Figur 2 rechte Kontaktpin 48 beispielsweise einen größeren Abstand zum Mantelflächenabschnitt 40 aufweist.

Im Wesentlichen im Parallelabstand zu der Trägerseite 26 der Trägerplatte 24 des Lampensockels 14 ist ein Lead-Frame bzw. eine Platine 50 angeordnet. Diese weist zwei in dieser Figur nicht sichtbare Ausnehmungen auf, durch die die Kontaktpins 46, 48 hindurch geführt sind und somit zwischen der Platine 50 und den Kontaktpins 46, 48 eine sogenannte Pin-in-Hole Verbindung ausgeführt ist. Die Kontaktpins 46, 48 sind dabei entweder selbsthemmend in die Ausnehmungen der Platine 50 eingebracht oder werden zusätzlich mit der Platine 50 beispielsweise verschweißt. Die Platine 50 hat mittig einen in dieser Figur ebenfalls nicht sichtbaren Ausnehmungsbereich, durch welchen der Mitteldom 28 hindurch geführt ist. Zusätzlich zu den Kontaktpins 46, 48 wird die Platine 50 durch das Sockelelement 32 lagefixiert, was untenstehend in den folgenden Figuren näher erläutert ist.

Figur 3 zeigt das Sockelelement 32 gemäß dem Ausführungsbeispiel in einer Seitenansicht, wobei Teile der Zeichnung in einer Ausbruchsdarstellung abgebildet sind. In einer Transformatorkammer 52 des Sockelelements 32 ist ein Transformator 54 vollständig aufgenommen.

Der Transformator 54 hat einen Transformatorkern 56, der von einer ersten Wicklung bzw. Sekundärwicklung 58 umwickelt ist, wobei die Sekundärwicklung 58 und der Transformatorkern 56 von einem einen in etwa ellipsenförmigen Querschnitt aufweisenden Transformatorgehäuse 60 umschlossen sind.

Der Transformator 60 wird über in eine in Figur 3 oben liegende Öffnungsseite 62 der Transformatorkammer 52 eingebracht. Die Öffnungsseite liegt dabei in etwa in einer gleichen Ebene wie eine Ringoberseite 64 des Mittenkontaktrings 34 der Sockelelements 32.

Ein Mittenkontaktelement 66 zur elektrischen Kontaktierung von der Hochdruckentladungslampe 1 aus Figur 1 und des Transformators 54 ist derart in das Sockelelement 32 eingebettet, dass ein in dieser Figur nicht dargestellter Transformatorkontaktbereich des Mittenkontaktelements 66 zur Kontaktierung der aus dem Transformatorgehäuse 60 geführten Sekundärwicklung 58 des Transformators 54 innerhalb der Transformatorkammer 52 und ein Lampenkontaktbereich 68 des Mittenkontaktelements 66 im Mittenkontaktring 34 angeordnet ist. Die Anordnung des Mittenkontaktelements 66 wird in den weiter unten beschriebenen Figuren genauer erläutert. Der Mittenkontaktring 34 ist im Bereich des Lampenkontaktbereichs 68 des Mittenkontaktelements 66 zum Verschweißen mit der Stromzuführung 10 der Hochdruckentladungslampe 1 aus Figur 1 zur Ringoberseite 64 hin offen.

Der Lampenkontaktbereich 68 des Mittenkontaktelements 66 weist ferner zur Durchführung der Stromzuführung 10 aus Figur 1 eine sich entlang einer Ringachse 70 des Mittenkontaktrings 34 erstreckende Durchgangsöffnung 72 auf. In der Durchgangsöffnung 72 mündet ein sich von einer Ringunterseite 75 sich entlang der Ringachse 70 erstreckender und zu der Durchgangsöffnung 72 hin verjüngender Trichter 76. Der Trichter 76 dient zur einfachen Aufnahme der Stromzuführung 10 aus Figur 1 bei der Montage der Hochdruckentladungslampe 1.

An der Ringunterseite 75 des Mittenkontaktrings 34 sind zur Verbindung mit dem Mitteldom 28 des Lampensockels 14 aus Figur 2 eine sich jeweils um die Ringachse 70 erstreckende Ringfeder 78 und ein einen größeren Durchmesser aufweisender ringförmiger Energierichtungsgeber 80 mit einem spitzförmigen Querschnitt ausgebildet. Der Energierichtungsgeber 80 dient dabei zum Ultraschallverschweißen.

Eine der Öffnungsseite 62 der Transformatorkammer 52 gegenüberliegende Kontaktierungsseite 82 hat zwei nach unten in Figur 3 auskragende und zueinander versetzte Passstifte 84, 86, die eine Fixierung des Sockelelements 32 auf der Platine 50 in Figur 2 unterstützen.

Das Sockelelement 32 aus der Figur 3 ist beispielsweise ein Kunststoff-Spritzgussbauteil aus Polyphenylensulfid (PPS).

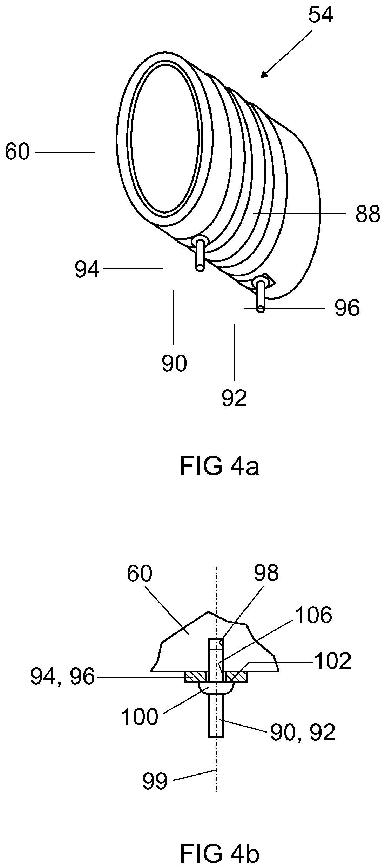

Figur 4a zeigt den Transformator 54 in einer perspektivischen Ansicht. Eine das Transformatorgehäuse 60 umwickelnde Flachbandwicklung aus Kupfer dient als eine zweite Wicklung bzw. als eine Primärwicklung 88 des Transformators 54. Anstelle des Flachbands wäre auch ein Runddraht als Primärwicklung 88 denkbar.

Das einen ellipsenförmigen Querschnitt aufweisende Transformatorgehäuse 60 hat eine Länge die größer als die maximale Höhe ist. Zwei Kontaktpins 90, 92 kragen von einem Hauptscheitel des Transformatorgehäuses 60 radial nach außen in eine gemeinsame Richtung aus, wobei die Kontaktpins 90 und 92 jeweils ein Wicklungsende 94 bzw. 96 der Primärwicklung 88 am Transformatorgehäuse 60 festlegen und elektrisch kontaktieren.

In der Figur 4b ist ein Wicklungsende 94, 96 mit einem Kontaktpin 90, 92 aus Figur 4a vergrößert in einer Querschnittansicht dargestellt. Die Kontaktpins 90, 92 sind in Stiftausnehmungen 98 des Transformatorgehäuses 60 beispielsweise selbsthemmend mittels einer Presspassung oder durch verkleben eingesetzt. In etwa mittig in Bezug auf eine Pinlängsachse 99 der Kontaktpins 90, 92 ist ein Klemmkragen 100 ausgebildet, der eine in etwa flache und zur Pinlängsachse 99 der Kontaktpins 90, 92 senkrecht ausgebildete Klemmfläche 102 hat. Zwischen der Klemmfläche 102 und dem Transformatorgehäuse 60 sind jeweils die Wicklungsenden 94, 96 der Primärwicklung 88 eingeklemmt. Die Wicklungsenden 94, 96 weisen dabei jeweils eine Durchgangsöffnung 106 auf, durch die der jeweilige Kontaktpin 90 und 92 hindurchgeführt ist. Für eine zusätzliche Fixierung können die Wicklungsenden 94 und 96 mit dem jeweiligen Kontaktpin 90 bzw. 92 verlötet werden. Die Wicklungsenden 94, 96 und somit die Primärwicklung 88 sind durch die Kontaktpins 90, 92 somit kraft-, stoff- und/oder formschlüssig fixiert und elektrisch kontaktiert. Hierdurch kann die Primärwicklung 88 im Fertigungsprozess auch mit einer geringeren Genauigkeit im Vergleich zum Stand der Technik gewickelt werden, da eine allein durch die Wicklung erfolgte Fixierung der Primärwicklung 88 am Transformatorgehäuse 60 nicht mehr notwendig ist. Die Primärwicklung 88 ist durch die Kontaktpins 90, 92 äußerst robust und weist eine hohe mechanische Festigkeit auf, wodurch der Transformator 54 schüttgutfähig ist und nicht, wie im Stand der Technik, zum Schutz in sogenannten Transformatorentrays aufgenommen werden muss, die hohe zusätzliche Kosten verursachen, da diese einerseits aufwendig mit Transformatoren bestückt und andererseits regelmäßig einer Reinigung zum Entfernen von Staub und Materialresten unterzogen werden müssen. Durch die Schüttgutfähigkeit des Transformators 54 werden Transport- und Lagerkosten deutlich im Vergleich zum Stand der Technik reduziert, die Handhabung im Fertigungsprozess ist vereinfacht und die Herstellung und Montage ist sicherer.

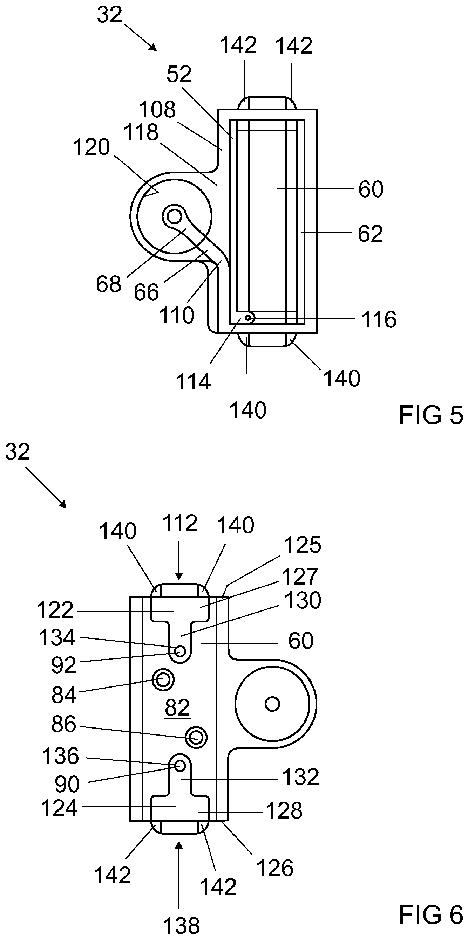

Figur 5 zeigt das Sockelelement 32 in einer Draufsicht in Richtung der Öffnungsseite 62 aus Figur 3 gemäß dem Ausführungsbeispiel. Hierbei ist die Anordnung des Mittenkontaktelements 66 ersichtlich. Der zungenförmige Lampenkontaktbereich 68 des Mittenkontaktelements 66 erstreckt sich dabei in der Figur 5 in etwa schräg nach unten zu einer Längsseite 108 der Transformatorkammer 52, an der der Mittenkontaktring 34 ausgebildet ist. Anschließend an den Lampenkontaktbereich 68 ist ein Mittenabschnitt 110 des Mittenkontaktelements 66 im Wesentlichen in die Längsseite 108 eingebettet und erstreckt sich bis zu einer in Figur 5 unteren Querseite 112 der Transformatorkammer 52. Das Mittenkontaktelement 66 kragt an der Längsseite 108 mit einem Transformatorkontaktbereich 114 in etwa entlang der Querseite 112 in die Transformatorkammer 52 aus. Im Bereich des Transformatorkontaktbereichs 114 des Mittenkontaktelements 66 ist ein Wicklungsende 116 der Sekundärwicklung 58 (siehe Figur 3), aus dem Transformatorgehäuse 60 geführt und wird mit dem Transformatorkontaktbereich 114, beispielsweise in Form einer Verschweißung, elektrisch verbunden.

Das Mittenkontaktelement 66 besteht beispielsweise aus X5CrNi1810 und wird als Einlegeteil in das durch Kunststoffspritzguss hergestellte Sockelelement 32 integriert.

Wie aus der Figur 5 ersichtlich, ist der Mittenkontaktring 34 im Wesentlichen mittig in Längsrichtung der Längsseite 108 der Transformatorkammer 52 angeformt. Der Verbindungsbereich des Mittenkontaktrings 34 mit der Längsseite 108 ist über einen Verbindungssteg 118 verstärkt. Die Längsseite 108 der Transformatorkammer 52 ist im Bereich des Mittenabschnitts 110 des Mittenkontaktelements 66 verbreitert, um das Mittenkontaktelement 66 ausreichend einzubetten.

Der Mittenkontaktring 34 hat einen von der Ringoberseite 64 zurückgestuften kreisförmigen Innenabschnitt 120, wodurch der Lampenkontaktbereich 68 des Mittenkontaktelements 66 freiliegt.

Figur 6 zeigt eine Untersicht auf das Sockelelement 32 gemäß dem Ausführungsbeispiel. Hierbei ist die versetzte Anordnung der Passstifte 84, 86 an der Kontaktierungsseite 82 des Sockelelements 32 erkennbar. Kontaktplatten 122, 124 sind zur elektrischen Kontaktierung der Kontaktpins 90, 92 des Transformators 54 aus Figur 4a an der Kontaktierungsseite 82 des Sockelelements 32 angeordnet. Die Kontaktplatten 122, 124 sind derart in die Kontaktierungsseite 82 eingebracht, dass die Kontaktierungsseite 82 in etwa eine ebene Fläche aufweist, insbesondere zur flächigen Auflage auf die Platine 50 aus Figur 2. An Querkanten 125 und 126 des Sockelelements 32 kragen die Kontaktplatten 122 und 124 von dem Sockelelement 32 mit einem Kontaktabschnitt 127 bzw. 128 nach außen, wobei diese Kontaktabschnitte 127, 128 zum Widerstandspunktverschweißen oder Laserschweißen mit der Platine 50 aus Figur 2 vorgesehen sind. Die Kontaktpins 90 und 92 sind durch die Kontaktierungsseite 82 hindurchgeführt und sind jeweils mit aufeinander zuweisenden Kontaktzungen 130 bzw. 132 der Kontaktplatten 122 bzw. 124 verlötet. Die Kontaktzungen 130 und 132 haben jeweils eine Durchgangsöffnung 134 bzw. 136 zur einfachen Aufnahme der Kontaktpins 90, 92. Durch die Verlötung der Kontaktpins 90, 92 wird die Transformatorkammer 52, siehe Figur 5, hermetisch verschlossen. Die auskragenden Kontaktabschnitt 127 und 128 der jeweiligen Kontaktplatten 122 bzw. 124 werden von an Querseiten 112, 138 des Sockelelements 32 ausgebildeten Fixierungselementen 140, 142 abschnittsweise seitlich begrenzt. Durch die Fixierungselemente 140, 142 sind die Kontaktplatten 122, 124 vor mechanischen Belastungen, die beispielsweise bei der Montage des Sockelelements 32 auftreten, besser geschützt, womit das Sockelelement 32 schüttgutfähig sein kann. Die Fixierungselemente 140, 142 sind ebenfalls in der Figur 5 ersichtlich. Die Kontaktplatten 122, 124 werden entweder nach der Kunststoff-Spritzgussherstellung des Sockelelements 32 montiert oder alternativ als Einlegeteile mit eingespritzt.

Die Klemmkragen 100 der Kontaktpins 90, 92, siehe Figur 4a, dienen neben der Fixierung der Primärwicklung 88 zusätzlich als Distanzelement zur Beabstandung der Primärwicklung 88 im eingesetzten Zustand in das Sockelelement 32 von einer Innenwandung 143 der Transformatorkammer 52 in der Figur 3.

Durch die Kontaktierung der Kontaktplatten 122, 124 mit der Primärwicklung 88 des Transformators 54 aus Fig. 6 über die Kontaktpins 90, 92 ist ein Laserschweissprozess mit der Primärwicklung 88 zur elektrischen Kontaktierung und direkten mechanischen Verbindung mit beispielsweise der Platine 50 aus Figur 2 wie im Stand der Technik nicht mehr notwendig, da die Primärwicklung 88 über die Kontaktplatten 122, 124 mit der Platine 50 kontaktiert werden kann. Durch den wegfallenden Laserschweissprozess ist eine aufwendige und kostenintensive für den Laserschweissprozess notwendige Nickelbeschichtung der Primärwicklung 88 überflüssig.

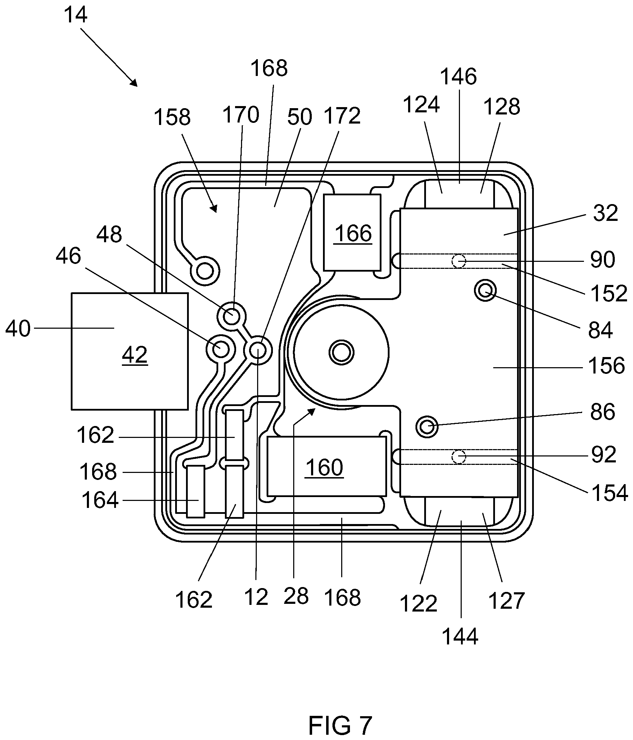

Zur elektrischen Isolierung des Transformators 54 in der Transformatorkammer 52 des Sockelelements 32 aus Figur 3 wird der Raum zwischen der Innenwandung 143 der Transformatorkammer 52 und dem Transformator 54 mit einem Vergusswerkstoff, beispielsweise ein kostengünstiger Silikon-Kautschuk, wie Elastosil RT 745 S der Fa. Wacker Chemie, vergossen. Vor dem Verguss werden das Sockelelement 32 und der Transformator aus Figur 3 mit einem Grundierwerkstoff, beispielsweise der für RTV2-Silikone bestimmte G790 der Fa. Wacker Chemie, grundiert und das Wicklungsende 116 der Sekundärwicklung 58 aus Figur 3 und 5 mit dem Transformatorkontaktbereich 114 des Mittenkontaktelements 66 verlötet. Der Vergusswerkstoff kann problemlos beispielsweise eine zehnfach höhere thermische Ausdehnung als der Lampensockel 14 aus Figur 2 aufweisen, da das den Vergusswerkstoff aufnehmende Sockelelement 32 von dem Lampensockel 14 größtenteils mechanisch abgekoppelt ist. In Figur 7 ist der Lampensockel 14 gemäß dem Ausführungsbeispiel in einer Untersicht ohne Sockeldeckel mit der Platine 50 dem Sockelelement 32 und der Steckerbuchse 42 gezeigt. Das Sockelelement 32 wird mit der Platine 50 über die auskragenden Kontaktabschnitte 127, 128 der Kontaktplatten 122, 124 mit Widerstandspunktschweißen oder alternativ mit Laserschweißen verschweißt. Die dazu erforderlichen Schweißbereiche 144, 146 liegen dabei zwischen der Kontaktierungsseite 82 des Sockelelements 32 aus Figur 6 und der Platine 50, im Wesentlichen im Bereich der auskragenden Kontaktabschnitte 127, 128. Durch die Schweißung wird das Sockelelement 32 zum Einen mechanisch mit der Platine 50 verbunden und zum Anderen wird die Primärwicklung 88 des Transformators 54 aus Figur 3 elektrisch mit der Platine 50 kontaktiert.

Die Platine 50 weist im Bereich der Kontaktpins 90, 92 des Sockelelements 32 Dehnungsfugen 152, 154 auf. Diese erstrecken sich im Wesentlichen fingerartig senkrecht von einer in der Figur 7 rechten Platinenseite 156 etwa im Bereich unterhalb des Sockelelements 32. Durch die Dehnungsfugen 152, 154 können beispielsweise Volumenänderungen der Platine 50 aufgrund von Temperaturschwankungen im Betrieb der Hochdruckentladungslampe 1 aus Figur 1 oder Ausdehnungen des Silikonvergusses des Sockelelements 32, die beispielsweise über die verschweißten Kontaktabschnitte 127, 128 auf die Platine 50 übertragen werden, ausgeglichen werden. Eine weitere Funktion der Dehnungsfugen 152, 154 liegt darin, dass diese die Kontaktpins 90, 92 aufnehmen können, falls diese aus der Kontaktierungsseite 82 des Sockelelements 32, siehe Figur 6, auskragen, womit eine in etwa planare Auflagemöglichkeit der Kontaktierungsseite 82 auf der Platine 50 auch in diesem Fall ermöglicht ist.

Durch formschlüssige Verbindung der an dem Sockelelement 32 ausgebildeten Passstifte 84, 86, die in der Figur 7 in etwa in der Nähe der Schweißbereiche 146, 148 angeordnet sind, mit der Platine 50, ist eine Entlastung der Schweißbereiche 146, 148 von thermischen und dynamischen Wechselkräften zwischen dem Sockelelement 32 und der Platine 50 ermöglicht.

In der Zusammenschau der Figuren 7 und 2 ist ersichtlich, das ein von außen leicht zugänglicher Freiraum 158 im Wesentlichen von der Platine 50, von dem Mantelflächenabschnitt 40 des Lampensockels 14, dem Mitteldom 28 und dem Sockelelement 32 begrenzt ist. Über den Freiraum 158 kann die Platine 50 einfach mit elektrischen Bauteilen bestückt werden. Die hier verwendeten elektrischen Bauteile sind beispielsweise ein Kondensator 160, der in der Figur 7 in etwa unterhalb des Mitteldoms 28 auf der Platine 50 befestigt ist und wie aus Figur 2 erkennbar etwa die halbe Höhe des Sockelelements 32 aufweist, Widerstände 162, eine Supressor-Diode 164 und diverse andere elektronische Bauteile 166. In dem Bereich des Freiraums 158, wo die Kontaktpins 46, 48 aus der Platine 50 auskragen, ist ausreichend Platz, beispielsweise für ein Schneidmesser mit dem Durchmesser d = 10mm zum abschneiden diverser aus der Platine 50 auskragender Drähte, vorgesehen. Durch die großzügigen Abmessungen der Platine 50 und des Freiraums 158 ist es nicht notwendig, dass Leiterbahnen 168 aufgrund von Platzmangel zwischen beispielsweise Bauteilen 160 bis 166 und der Platine 50 hindurchgeführt werden. Die Platine 50 bietet ferner ein erhebliches Flächenpotential zur Integration weiterer Bauteile, wie beispielsweise einer nicht dargestellten Drossel, die zwischen den Kontaktierungspunkten 170, 172 angeordnet werden kann.

Der Rückleiter bzw. die Stromzuführung 12 der Halogenentladungslampe 1 aus Figur 1 ist durch den Kontaktierungspunkt 172 als Pin-in-Hole Verbindung geführt und wird über diesen zusätzlich mit der Platine 50 verschweißt.

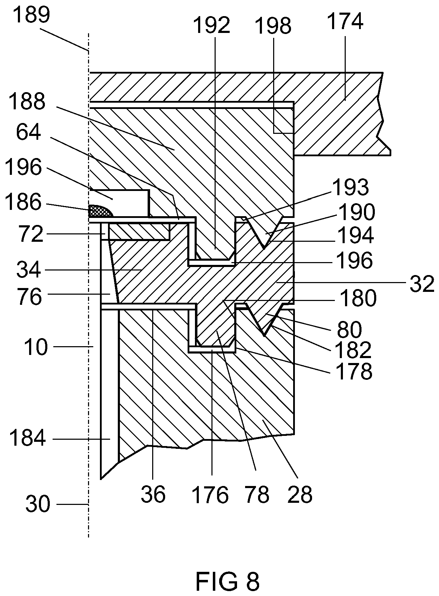

Figur 8 zeigt in einer Seitenansicht einen Querschnitt durch den Mitteldom 28, dem Sockelelement 32 und einem Sockeldeckel 174 gemäß dem Ausführungsbeispiel zur genaueren Darstellung der Verbindung zwischen diesen Bauelementen. Der Mitteldom 28 hat zur Aufnahme der Ringfeder 78 des Mittenkontaktrings 34 des Sockelelements 32 eine Ringnut 176 an der Domstirnfläche 36, die derart ausgeführt ist, dass die Ringfeder 78 nur mit einer Ringaußenfläche 178 an einer Nutwandungsfläche 180 im Wesentlichen anliegt und somit die Ringfeder 78 und die Ringnut 176 ein Passung bilden.

Der spitzförmige Energierichtungsgeber 80 des Mittenkontaktrings 34 füllt vollständig eine an der Domstirnfläche 36 des Mitteldoms 28 ebenfalls spitzförmig ausgebildete Aufnahmenut 182 aus. Durch den Energierichtungsgeber 80 kann der Mittenkontaktring 34 mit dem Mitteldom 28 über ein Ultraschallschweißverfahren verschweißt werden. Das Ultraschallschweißen führt zum Einen zu einer hohen Hochvolt-Festigkeit der Verbindungsstelle und zum Anderen können hierdurch geringe Geometrische Herstellungstoleranzen erreicht werden. Die Belastung durch die hochfrequenten Ultraschallschwingungen ist nur im Bereich des Mittenkontaktrings 34 wirksam. Der Silikonverguss in der Transformatorkammer 52 aus Figur 3 führt aufgrund seiner hohen Trägheit die Ultraschallschwingungen nicht mit. Ist das Entladungsgefäß 4 aus Figur 1 bereits mit dem Lampensockel 14 montiert, so ist aufgrund des geringen Ultraschall-Energieeintrags kaum eine Wechselwirkung mit dem Entladungsgefäß 4 vorhanden. Alternativ zum Ultraschallverschweißen kann die Verbindung zwischen dem Energierichtungsgeber 80 und der Aufnahmenut 182 auch beispielsweise mit einer Klebefuge mit einem 2K-Epoxydharz, wie DeloDuopox der Fa. Delo, realisiert werden.

Der Mitteldom 28 in Figur 5 weist einen Stromzuführungskanal 184 zur Aufnahme der Stromzuführung 10 des Entladungsgefäßes 4 aus Figur 1 auf, wobei sich der Stromzuführungskanal 184 entlang der Sockellängsachse 30 des Mitteldoms 28 erstreckt und zu dem Trichter 76 des Mittenkontaktrings 34 hin mündet. Die Stromzuführung 10 ist dabei über den Stromzuführungskanal 184 und den Trichter 76 durch die Durchgangsöffnung 72 des Mittenkontaktelements 66 hindurchgeführt und durch eine Schweißkuppe 186 mit dem Mittenkontaktelement 66 verschweißt und somit elektrisch kontaktiert und mechanisch verbunden.

Der Sockeldeckel 174 ist in der Figur 5 nur ausschnittsweise gezeigt. Dieser ist hierbei über ein zylinderförmiges Deckelzwischenstück 188 mit dem Mittelkontaktring 34 fest verbunden. Die Deckelzwischenstückachse 189 liegt dabei in etwa auf der Sockellängsachse 30 des Mitteldoms 28. Für die Verbindung des Deckelzwischenstücks 188 mit dem Sockelelement 32 ist ein Energierichtungsgeber 190 und eine Ringfeder 192, entsprechend wie bei dem Mittelkontaktring 34, an einer dem Mittelkontaktring 34 zuweisenden Zwischenstückunterseite 193 ausgebildet. Der Energierichtungsgeber 190 und die Ringfeder 192 sind dabei in einer Aufnahmenut 194 und einer Ringnut 196, die jeweils an der Ringoberseite 64 des Mittelkontaktrings 34 ausgebildet sind und der Aufnahmenut 182 und der Ringnut 176 des Mitteldoms 28 entsprechen, aufgenommen. Die Aufnahmenut 194 und die Ringnut 196 werden nur in dieser Figur 8 dargestellt.

Am Deckelzwischenstück 188 ist mittig von der Zwischenstückunterseite 193 her ein Aufnahmebereich 196 zurückgestuft, durch den die Schweißkuppe 186 aufnehmbar und somit von dem Deckelzwischenstück 188 beabstandet ist. Die Verschweißung mit der Schweißkuppe 186 ist durch das Deckelzwischenstück 188 und den Sockeldeckel 174 Hochvoltfest isoliert.

Das Deckelzwischenstück 188 ist in eine zylindrische Ausnehmung 198 des Sockeldeckels 174 gesteckt und fest mit diesem beispielsweise durch Klebstoff verbunden.

Der Sockeldeckel 174 besteht aus einem kostengünstigen Kunststoff, wie zum Beispiel PA66, und das Deckelzwischenstück 188 aus PPS entsprechend dem Sockelelement 32.

Zum Verschließen des Lampensockels 14 ist dieser vollständig, wie in Figur 1 ersichtlich von dem Sockeldeckel 174 umgeben.

Die bestückte Platine 50 in Figur 7 ist über die Pin-in-Hole Verbindungen der Kontaktpins 46, 48 der Steckerbuchse 42 und der Stromzuführung 12 der Hochdruckentladungslampe 1 aus Figur 1 und den Schweißbereichen 144, 146 des Sockelelements 32 fixiert. Ein sogenanntes Heißverstemmen zur Fixierung der Platine, wie im Stand der Technik, kann entfallen.

Durch den einfachen und mehrteiligen Aufbau des Lampensockels 14 treten Toleranzverkettungen über drei oder vier einzelner Komponenten des Lampensockels 14 im Vergleich zum Stand der Technik kaum mehr auf.

Offenbart ist ein mehrteilig aufgebauter Lampensockel mit einem separaten Sockelelement, wobei in dem Sockelelement ein Transformator aufgenommen ist, bei dem zumindest eine Wicklung über einen Kontaktpin fixiert ist.

## Patentansprüche

1. Lampensockelelement (32) mit einem Transformator (54) mit einer den Transformator (54) aufnehmenden Transformatorkammer (52), wobei der Transformator (54) vollständig in der Transformatorkammer (52) aufgenommen ist und ein Transformatorgehäuse (60) aufweist, das einen mit einer ersten Wicklung (58) versehenen Transformatorkern (56) umschließt, und wobei um das Transformatorgehäuse (60) herum eine zweite Wicklung (88) angeordnet ist, die mit zumindest einem Kontaktelement (90, 92) an dem Transformatorgehäuse (60) festgelegt ist, **dadurch gekennzeichnet, dass** Kontaktpins (90, 92) des Transformators (54) durch eine einer Öffnungsseite (62) gegenüberliegenden Kontaktierungsseite (82) der Transformatorkammer (52) hindurchgeführt sind.

2. Lampensockelelement nach Anspruch 1, wobei ein Mittenkontaktelement (66) in der Transformatorkammer (52) derart eingebracht ist, dass ein Transformatorkontaktbereich (114) des Mittenkontaktelements (66) zur Kontaktierung der aus dem Transformatorgehäuse (60) geführten ersten Wicklung (58) des Transformators (54) innerhalb und ein weiterer Lampenkontaktbereich (68), insbesondere zur Kontaktierung einer Hochdruckentladungslampe (1), außerhalb der Transformatorkammer (52) angeordnet ist.

3. Lampensockelelement nach Anspruch 1 oder 2, wobei eine die Öffnungsseite (62) begrenzende Mantelfläche der Transformatorkammer (52) zwei Längsseiten (108) und zwei Querseiten (112, 138) aufweist, die im Wesentlichen rechtwinklig zueinander angeordnet sind.

4. Lampensockelelement nach Anspruch 3, wobei der Lampenkontaktbereich (68) des Mittenkontaktelements (66) in einem Mittenkontaktring (34) aufgenommen ist, der mittig in Längsrichtung der Längsseite (108) der Transformatorkammer (52) derart an die Längsseite (108) angeformt ist, so dass eine Ringachse (70) sich in etwa parallel zu einem Kontaktpin (90, 92) des Transformators (54) erstreckt und eine Ringoberseite (64) in etwa bündig mit der Öffnungsseite (62) der Transformatorkammer (52) abschließt.

5. Lampensockelelement nach Anspruch 4, wobei in etwa mittig von dem Mittenkontaktring (34) ein Trichter (76) ausgebildet ist, der sich entlang der Ringachse (70) in Richtung der Flächennormalen der Öffnungsseite (62) der Transformatorkammer (52) bis zum Lampenkontaktbereich (68) des Mittennkontaktelements (66) hin verjüngt.

6. Lampensockelelement nach Anspruch 4 oder 5, wobei der Mittenkontaktring (34) an einher Ringunterseite (75) eine Ringfeder (78) und einen, einen größeren Radius als die Ringfeder (78) aufweisenden, ringförmigen Energierichtungsgeber (80) mit einem spitzförmigen Querschnitt jeweils zur Verbindung mit dem Lampensockel (14) ausbildet.

7. Lampensockelelement nach einem der Ansprüche 1 bis 6, wobei von außen an der Kontaktierungsseite (82) der Transformatorkammer (52) die Kontaktpins (90, 92) mit Kontaktplatten (122, 124) in Verbindung stehen.

8. Lampensockelelement nach einem der Ansprüche 1 bis 7, wobei an der Kontaktierungsseite (82) des Lampensockelelements (32) zumindest ein Passstift (84, 86) ausgebildet ist.

9. Lampensockel, insbesondere zur Aufnahme einer Hochdruckentladungslampe (1), mit einer Trägerplatte (24), wobei an einer der Hochdruckentladungslampe (1) abgewandten Trägerseite (26) der Trägerplatte (24) ein zylindrischer Mitteldom (28) mittig angeformt ist, wobei ein Lampensockelelement (32) nach einem oder mehreren der Ansprüche 1 bis 8 mit der Ringunterseite (75) an einer Mitteldomkopfseite (36) in etwa anliegt und an dem Mitteldom (28) festgelegt ist.

10. Lampensockel nach Anspruch 9, wobei in den Lampensockel (14) eingebettete Kontaktpins (46, 48) einer Steckerbuchse (42) aus der Trägerseite (26) auskragen und in Ausnehmungen einer im Parallelabstand zur Trägerplatte (24) angeordneten Platine (50) eingreifen, wobei sich der zylindrische Mitteldom (28) durch eine Platinenausnehmung der Platine (50) hindurch erstreckt.

11. Lampensockel nach einem der Ansprüche 9 oder 10, wobei die Ringfeder (78) und der Energierichtungsgeber (80) des Lampensockelelements (32) in jeweils eine Ringnut (176) und eine Ringaufnahme (178) des Mitteldoms (28) eintauchen.

12. Lampensockel nach einem der Ansprüche 9 bis 11, wobei der Mitteldom (28) einen eine Stromzuführung (10) aufnehmenden Stromzuführungskanal (184) aufweist, der sich entlang der Mittelachse (30) des Mitteldoms (28) erstreckt und zum Trichter (76) des Lampensockelelements (32) hin mündet.

13. Lampensockel nach einem der Ansprüche 9 bis 12, wobei ein Sockeldeckel (174) den Lampensockel (14) umschließt, wobei der Sockeldeckel (174) zur mechanischen Verbindung mit dem Lampensockel (14) eine Ringfeder (192) und einen ringförmigen Energierichtungsgeber (190) ausbildet, die jeweils in eine Ringnut (196) und eine Ringaufnahme (194) des Lampensockelelements (32) eingetaucht sind.

14. Lampensockel nach einem der Ansprüche 10 bis 13, wobei die Platine (50) im Bereich der Kontaktpins (90, 92) des Lampensockelelements (32) Dehnungsfugen (152, 154) aufweist.

15. Lampensockel nach einem der Ansprüche 9 bis 14, wobei der zumindest eine Passstift (84, 86) des Lampensockelelements (32) in zumindest eine Stiftaufnahme der Platine (50) eingetaucht ist.

16. Entladungslampe mit einem Lampensockel (14) nach einem oder mehreren der Ansprüche 9 bis 15.

## Claims

1. Lamp base element (32) having a transformer (54) having a transformer chamber (52) which holds the transformer (54), wherein the transformer (54) is held completely in the transformer chamber (52) and has a transformer housing (60) which surrounds a transformer core (56) which is provided with a first winding (58), and wherein a second winding (88) is arranged around the transformer housing (60) and is fixed on the transformer housing (60) by means of at least one contact element (90, 92), **characterized in that** the contact pins (90, 92) of the transformer (54) are passed through a contact-making face (82) of the transformer chamber (52), which contact-making face (82) is opposite an opening face (62).

2. Lamp base element according to Claim 1, wherein a center contact element (66) is fitted in the transformer chamber (52) such that a transformer contact area (114) of the center contact element (66) for making contact with the first winding (58), which is passed out of the transformer housing (60), of the transformer (54) is arranged within the transformer chamber (52), and a further lamp contact area (68), in particular for making contact with a high-pressure discharge lamp (1), is arranged outside the transformer chamber (52).

3. Lamp base element according to Claim 1 or 2, wherein an envelope surface of the transformer chamber (52) which bounds the opening face (62) has two longitudinal faces (108) and two lateral faces (112, 138), which are arranged substantially at right angles to one another.

4. Lamp base element according to Claim 3, wherein the lamp contact area (68) of the central contact element (66) is held in a center contact ring (34), which is integrally formed on the longitudinal face (108) centrally in the longitudinal direction of the longitudinal face (108) of the transformer chamber (52), such that a ring axis (70) extends approximately parallel to a contact pin (90, 92) of the transformer (54), and a ring upper face (64) ends approximately flush with the opening face (62) of the transformer chamber (52).

5. Lamp base element according to Claim 4, wherein a funnel (76) is formed approximately at the center of the contact ring (34) and tapers along the ring axis (70), in the direction of the normal to the surface of the opening face (62) of the transformer chamber (52), as far as the lamp contact area (68) of the center contact element (66).

6. Lamp base element according to Claim 4 or 5, wherein, on an annular lower face, the center contact ring (34) forms a ring spring (78) and an annular energy direction transmitter (80) which has a larger radius than the ring spring (78), with a pointed cross section, in each case for connection to the lamp base (14).

7. Lamp base element according to one of Claims 1 to 6, wherein the contact pins (90, 92) are connected to contact plates (122, 124) from the outside on the contact-making face (82) of the transformer chamber (52).

8. Lamp base element according to one of Claims 1 to 7, wherein at least one alignment pin (84, 86) is formed on the contact-making face (82) of the lamp base element (32).

9. Lamp base, in particular for holding a high-pressure discharge lamp (1), having a mount plate (24), wherein a cylindrical center dome (28) is formed centrally on a mount face (26) of the mount plate (24) which faces away from the high-pressure discharge lamp (1), wherein a lamp base element (32) according to one or more of Claims 1 to 8 has an annular lower face (75) which rests approximately on a center dome head face (36), and is fixed to the center dome (28).

10. Lamp base according to Claim 9, wherein contact pins (46, 48), which are embedded in the lamp base (14), of a plug socket (42) project from the mount face (26) and engage in recesses in a board (50) which is arranged parallel to and at a distance from the mount plate (24), wherein the cylindrical center dome (28) extends through a board recess in the board (50).

11. Lamp base according to one of Claims 9 or 10, wherein the ring spring (78) and the energy direction transmitter (80) of the lamp base element (32) are respectively inserted into an annular groove (176) and an annular holder (178) in the center dome (28).

12. Lamp base according to one of Claims 9 to 11, wherein the center dome (28) has a power supply line channel (184), which holds a power supply line (10), extends along the center axis (30) of the center dome (28), and opens toward the funnel (76) of the lamp base element (32).

13. Lamp base according to one of Claims 9 to 12, wherein a base cover (174) surrounds the lamp base (14), wherein the base cover (174) forms a ring spring (192) and an annular energy direction transmitter (190) for mechanical connection to the lamp base (14), which are respectively inserted into an annular groove (196) and an annular holder (194) in the lamp base element (32).

14. Lamp base according to one of Claims 10 to 13, wherein the board (50) has expansion joints (152, 154) in the area of the contact pins (90, 92) of the lamp base element (32).

15. Lamp base according to one of Claims 9 to 14, wherein the at least one alignment pin (84, 86) of the lamp base element (32) is inserted into at least one pin holder in the board (50).

16. Discharge lamp having a lamp base (14) according to one or more of Claims 9 to 15.

## Revendications

1. Élément de culot de lampe (32) comprenant un transformateur (54) muni d'une chambre de transformateur (52) logeant le transformateur (54), le transformateur (54) étant entièrement logé dans la chambre de transformateur (52) et présentant un boîtier de transformateur (60) qui entoure un noyau de transformateur (56) muni d'un premier enroulement (58), et un deuxième enroulement (88) étant disposé autour du boîtier de transformateur (60),lequel enroulement est fixé sur le boîtier de transformateur (60) à l'aide d'au moins un élément de contact (90, 92), **caractérisé en ce que** des broches de contact (90, 92) du transformateur (54) sont guidées à travers un côté de mise en contact (82) de la chambre de transformateur (52), opposé à un côté d'ouverture (62).

2. Élément de culot de lampe selon la revendication 1, un élément de contact central (66) étant placé dans la chambre de transformateur (52) de manière à ce qu'une zone de contact de transformateur (114) de l'élément de contact central (66), pour la mise en contact du premier enroulement (58) du transformateur (54) guidé hors du boîtier de transformateur (60), soit disposée à l'intérieur de la chambre de transformateur (52) et en ce qu'une zone supplémentaire de contact de lampe (68), notamment pour la mise en contact d'une lampe à décharge (1) à haute pression, soit disposée à l'extérieur de la chambre de transformateur (52).

3. Élément de culot de lampe selon la revendication 1 ou 2, une surface d'enveloppe de la chambre de transformateur (52), délimitant le côté d'ouverture (62), présentant deux grands côtés (108) et deux côtés transversaux (112, 138) qui sont essentiellement disposés en angle droit les uns par rapport aux autres.

4. Élément de culot de lampe selon la revendication 3, la zone de contact de lampe (68) de l'élément de contact central (66) étant logée dans une bague de contact centrale (34) qui est formée sur le grand côté (108) de manière centrée en direction longitudinale du grand côté (108) de la chambre de transformateur (52) de manière à ce qu'un axe de bague (70) s'étende approximativement parallèlement à une broche de contact (90, 92) du transformateur (54) et qu'un côté supérieur de bague (64) se termine approximativement de manière affleurée avec le côté d'ouverture (62) de la chambre de transformateur (52).

5. Élément de culot de lampe selon la revendication 4, un entonnoir (76) étant formé approximativement au centre de la bague de contact centrale (34), lequel se rétrécit le long de l'axe de bague (70) en direction de la normale à la surface du côté d'ouverture (62) de la chambre de transformateur (52) jusqu'à la zone de contact de lampe (68) de l'élément de contact central (66).

6. Élément de culot de lampe selon la revendication 4 ou 5, la bague de contact centrale (34) formant sur un côté inférieur de bague (75) un ressort annulaire (78) et un capteur de direction d'énergie (80) annulaire présentant un rayon plus grand que le ressort annulaire (78), ayant une section transversale en forme de pointe respectivement pour la liaison avec le culot de lampe (14).

7. Élément de culot de lampe selon l'une quelconque des revendications 1 à 6, les broches de contact (90, 92) étant en liaison avec des plaques de contact (122, 124) depuis l'extérieur sur le côté de mise en contact (82) de la chambre de transformateur (52).

8. Élément de culot de lampe selon l'une quelconque des revendications 1 à 7, au moins une goupille d'ajustement (84, 86) étant réalisée sur le côté de mise en contact (82) de l'élément de culot de lampe (32).

9. Culot de lampe, notamment pour le logement d'une lampe à décharge (1) à haute pression, comprenant une plaque de support (24), un dôme central (28) cylindrique étant centralement formé sur un côté du support (26) de la plaque de support (24), détourné de la lampe à décharge (1) à haute pression, un élément de culot de lampe (32) selon l'une quelconque ou plusieurs des revendications 1 à 8 étant approximativement adjacent à un côté de tête de dôme central (36) avec le côté inférieur de bague (75) et étant fixé sur le dôme central (28).

10. Culot de lampe selon la revendication 9, des broches de contact (46, 48) d'un connecteur (42), intégrées dans le culot de lampe (14), faisant saillie hors du côté du support (26) et ayant prise dans des évidements d'une platine (50) disposée avec écart parallèle à la plaque de support (24), le dôme central (28) cylindrique s'étendant en traversant un évidement de la platine (50).

11. Culot de lampe selon l'une quelconque des revendications 9 ou 10, le ressort annulaire (78) et le capteur de direction d'énergie (80) de l'élément de culot de lampe (32) plongeant dans respectivement une rainure annulaire (176) et un logement annulaire (178) du dôme central (28).

12. Culot de lampe selon l'une quelconque des revendications 9 à 11, le dôme central (28) présentant un canal d'alimentation en courant (184) logeant une alimentation en courant (10), lequel s'étend le long de l'axe médian (30) du dôme central (28) et débouche vers l'entonnoir (76) de l'élément de culot de lampe (32).

13. Culot de lampe selon l'une quelconque des revendications 9 à 12, un couvercle de culot (174) entourant le culot de lampe (14), le couvercle de culot (174) formant un ressort annulaire (192) pour la liaison mécanique avec le culot de lampe (14) et un capteur de direction d'énergie (190) annulaire, lesquels sont respectivement immergés dans une rainure annulaire (196) et dans un logement annulaire (194) de l'élément de culot de lampe (32).

14. Culot de lampe selon l'une quelconque des revendications 10 à 13, la platine (50) présentant des joints de dilatation (152, 154) dans la zone des broches de contact (90, 92) de l'élément de culot de lampe (32).

15. Culot de lampe selon l'une quelconque des revendications 9 à 14, l'au moins une goupille d'ajustement (84, 86) de l'élément de culot de lampe (32) étant immergée dans au moins un logement de broche de la platine (50).

16. Lampe à décharge comprenant un culot de lampe (14) selon l'une quelconque ou plusieurs des revendications 9 à 15.
